Europäisches Patentamt

(19) European Patent Office

Office européen des brevets

(11) Veröffentlichungsnummer: **0 189 082**
**B1**

(12) **EUROPÄISCHE PATENTSCHRIFT**

(45) Veröffentlichungstag der Patentschrift: **01.08.90**

(21) Anmeldenummer: **86100352.3**

(22) Anmeldetag: **13.01.86**

(51) Int. Cl.⁵: **G 01 L 1/00,** G 01 L 5/28, B 60 T 17/22

(54) **Einrichtung zum Messen und/oder Regeln einer Bremskraft und/oder eines Bremsmomentes.**

(30) Priorität: **23.01.85 DE 3502050**

(43) Veröffentlichungstag der Anmeldung:
**30.07.86 Patentblatt 86/31**

(45) Bekanntmachung des Hinweises auf die
Patenterteilung:
**01.08.90 Patentblatt 90/31**

(84) Benannte Vertragsstaaten:
**AT DE FR GB IT NL SE**

(56) Entgegenhaltungen:
**DE-A-3 313 078**
**GB-A-2 139 763**
**US-A-2 844 227**

(73) Patentinhaber: **WABCO Westinghouse
Fahrzeugbremsen GmbH
Am Lindener Hafen 21 Postfach 91 12 80
D-3000 Hannover 91 (DE)**

(72) Erfinder: **Reinecke, Erich, Ing. grad.
Kastanieneck 6
D-3167 Burgdorf (Beinhorn) (DE)**

(74) Vertreter: **Schrödter, Manfred
WABCO Westinghouse Fahrzeugbremsen
GmbH Am Lindener Hafen 21 Postfach 91 12 80
D-3000 Hannover 91 (DE)**

Courier Press, Leamington Spa, England.

EP 0 189 082 B1

## Beschreibung

Die Erfindung betrifft eine Einrichtung zum Messen eines von einer Bremseinrichtung auf ein abbremsbares Element übertragenen Bremsmomentes, wobei die Bremseinrichtung und das abbremsbare Element eine Bremseinheit bilden können, gemäß dem Oberbegriff des Patentanspruchs 1.

Das Problem, eine Bremskraft und/oder ein Bremsmoment zu messen und/oder zu regeln, stellt sich in der Technik überall dort, wo relativ zueinander bewegliche Bauteile durch den Einsatz von Bremseinrichtungen relativ zueinander verzögert werden. Ist die Relativbewegung translatorisch, wie es beispielsweise bei der Bewegung eines Maschinenschlittens auf seinem Bett der Fall ist, so ist die Bremskraft die Meß- und/oder Regelgröße. Erfolgt die Relativbewegung entlang einer gekrümmten Bahn, wie es beispielsweise mit konstantem Krümmungsradius bei Radbremsen von Straßenfahrzeugen oder Seiltrommeln und mit veränderlichem Krümmungsradius beispielsweise bei Karussels—z.B. Achterbahn—der Fall ist, so kann die Bremskraft tangential sur Bahn und/oder das Produkt aus Bremskraft und Krümmungsradius, das Bremsmoment, die Meß- und/oder Regelgröße sein. Da bei der Bremsmomentenmessung und/oder -Regelung üblicherweise der Krümmungsradius (der Bahn) fest vorgegeben ist, läuft auch die Messung und/oder Regelung des Bremsmomentes auf eine solche der Bremskraft hinaus. Da jedoch unter "Bremskraft" andererseits in wesentlichen technischen Bereichen die auf eine Gesamteinheit, beispielsweise ein Fahrzeug, ausgeübte Verzögerungskraft verstanden wird, wird als Sammelbegriff für die vorstehend erwähnten Begriffe und Sachverhalte der Begriff "Bremsmoment" verwendet.

Eine Einrichtung der eingangs genannten Art ist aus I Mech E Conference Publications 1983-2: "Braking of Road Vehicles", dort insbesondere paper C 22/83: "The development and proving of an individual wheel brake torque measurement system (IWBTM) for commercial vehicles", von I. R. Slack, Seiten 135 bis 148, herausgegeben von MEP Mechanical Engineering Publications Limited for The Institution of Mechanical Engineers, London, bekannt. Bei diesem Stand der Technik werden die Verformungen eines Trägers (Achskörpers/einer als Bremseinheit dienenden Radbremse eines Fahrzeuges unter dem Einfluß des Bremsmomentes mittels Dehnungsmeßstreifen überwacht und das von den Dehnungsmeßstreifen gelieferte Ausgangssignal als Kenngröße für den Wert des Bremsmomentes gemessen. Dieser Stand der Technik ist siehe Spalte 2, Absatz 2 auf Seite 135 der zitierten Veröffentlichung, für Entwicklungs-, Forschungs- und Fehlersuchzwecke einsetzbar .

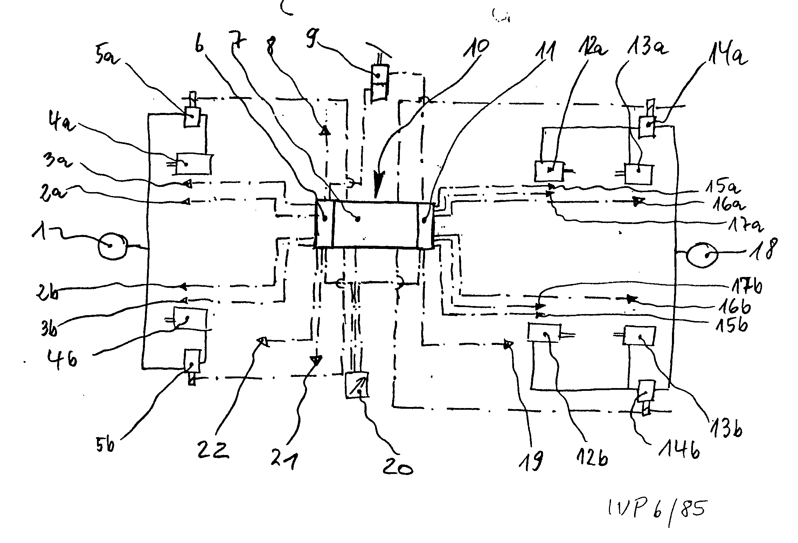

Aus Fig. 2 der US—A—2 844 227 ist es bekannt, die Temperatur einer Bremseinheit zu überwachen und beim Auftreten einer Übertemperatur die erzeugte Bremskraft bzw. das erzeugte Bremsmoment durch Minderung der zugeführten Betätigungsenergie herabzusetzen.

Der vorliegenden Erfindung liegt die Aufgabe zugrunde, mit einfachen Mitteln eine Einrichtung der eingangs genannten Art zu schaffen, die auch zur Messung und/oder Regelung des Bremsmomentes in betriebsmäßigem Dauereinsatz geeignet ist.

Dies Aufgabe wird durch die im Patentanspruch 1 angegebene Erfindung gelöst. Weiterbildungen und vorteilhafte Ausgestaltungen und Anwendungsfälle sind in den Unteransprüchen enthalten.

Die Erfindung bietet auch den Vorteil, daß Verfälschungen des Ergebnisses der Bremsmomentenmessung und/oder -regelung durch von dynamischen Einflüssen herrührenden Verformungen des Trägers, beispielsweise infolge von Fahrbahnunebenheiten, vermieden werden.

Die Erfindung geht, vereinfacht ausgedrückt, davon aus, daß zwischen dem von einer Bremseinrichtung auf ein abbremsbares Element übertragenen Bremsmoment und der dabei an oder in der Bremseinrichtung und/oder dem abbremsbaren Element entstehenden Temperatur ein gesetzmäßiger Zusammenhang bestehet, und nutzt diesen zur Messung und/oder Regelung des Bremsmomentes aus.

Die Erfindung ist bei jeder Art Bremseinheit, die Bewegungsenergie in Wärmeenergie umsetzt, anwendbar. Als Beispiele sollen Wirbelstrombremsen und Reibungsbremsen mit wenigstens einem wenigstens einen Bremsbelag aufweisenden Bremsbelagträger erwähnt werden. Dabei spielt im letztgenannten Fall keine Rolle, wie die zur Erzielung der Reibkraft erforderliche Normalkraft (Zuspannkraft) erzeugt wird. Das kann insbesondere über als Druckmittelzylinder oder als Stellmagnete ausgebildete Zuspanneinrichtungen erfolgen, wobei, wie bekannt, zwischen Zuspanneinrichtung(en) und Bremseinrichtung mechanische Übertragungsglieder wie Nocken, Hebel und Wellen und dergleichen angeordnet sein können.

Die Temperaturüberwachung kann auf alle bekannten zweckmäßigen Arten an oder in der Bremseinrichtung und/oder am oder in dem abbremsbaren Element erfolgen. Das temperaturabhängige Meßglied kann als temperaturabhängiger Gasdruckgeber (Thermofühler) ausgebildet sein, der als temperaturabhängige Ausgangssignale Gasdruckänderungen liefert, wobei die Auswerteeinrichtung entsprechend gasdrucksensitiv sein muß. Das temperaturabhängige Meßglied kann auch als elektrische Ausgangssignale abgebender Temperatursensor ausgebildet sein, wobei die Auswerteeinrichtung elektrisch/elektronisch ausgebildet sein muß. Die Ausgangssignale können der Auswerteeinrichtung im letztgenannten Fall über Leiter oder drahtlos zugeführt werden. Letztere Möglichkeit ist besonders vorteilhaft, wenn die Bremseinrichtung und/oder das abbremsbare Element und damit der Temperatursensor relativ zur Auswerteeinrichtung nicht ortsfest angeordnet sind und Leiter mit Schleifkontakten, wie sie beispielsweise bei Anordnung des Temperatursensors in einem als umlaufende Bremsscheibe oder Bremstrommel ausgebildeten abbremsbaren Element vorteilhaft sein können, nicht einsetzbar sind.

Das temperaturabhängige Meßglied kann in dem überwachten Bauteil angebracht oder in dessen Material eingebettet sein.

Im Fall einer Reibungsbremse kann das temperaturabhängige Meßglied, insbesondere wenn als Temperatursensor ausgebildet, in dem Bremsbelagträger und/oder dem Bremsbelag derart angeordnet sein, daß sein dem abbremsbaren Element nächster Punkt beim Eintritt eines höchstzulässigen Bremsbelagverschleißes mit dem abbremsbaren Element in Berührung kommt und dabei über dieses einen elektrischen Anzeige- und/oder Warnkreis schließt. Auf diese Weise kann vorteilhaft eine Einrichtung zum Messen und/oder Regeln eines Bremsmomentes mit einer Warnanlage für den Bremsbelagverschleiß kombiniert werden.

Es können an jeder Bremseinrichtung und/oder jedem abbremsbaren Element auch mehrere temperaturabhängige Meßglieder angeordnet sein. Dies kann insbesondere dann von Bedeutung sein, wenn die Bremseinheit eine Reibungsbremse mit mehreren Bremsbelagträgern ist, wie es beispielsweise bei Radbremsen von Fahrzeugen üblicherweise der Fall ist.

Beim Einsatz der vorliegenden Erfindung zur Bremsmomentenregelung ist eine Vergleichseinrichtung erforderlich, die das von der Auswerteeinrichtung abgegebene Ausgangssignal mit wenigstens einem Sollwert vergleicht und ein dem Vergleichsergebnis entsprechendes Ausgangssignal liefert, welches einer Signalverarbeitungseinrichtung und/oder einem Speicher zugeführt wird.

Die obenerwähnte Auswerteeinrichtung kann mit dem temperaturabhängigen Meßglied vereinigt oder als Eingangsstufe der Vergleichseinrichtung ausgebildet sein.

Die Signalverarbeitungseinrichtung kann als Bremsmomentensteuereinrichtung, welche das Bremsmoment nach Maßgabe des Ausgangssignals der Vergleichseinrichtung steuert, und/oder als Warnanlage ausgebildet sein, die in bekannter Weise optische oder akustische Warnsignale abgeben kann. Die Bremsmomentensteuereinrichtung wird in der Regel so ausgebildet sein, daß sie die Energiezufuhr zu der Zuspanneinrichtung in Abhängigkeit von der Stärke des ihr zugeführten Ausgangssignals der Vergleichseinrichtung und damit die Zuspannkraft steuert. Konkret kann die Bremsmomentensteuereinrichtung beispielsweise als elektrisch gesteuertes Druckregelventil oder elektrisch gesteuerter Magnetstromregler ausgebildet sein.

Als Sollwert der Vergleichseinrichtung kann ein der höchstzulässigen Temperatur an der Bremseinheit entsprechender Wert dienen. In diesem Fall kann die Bremsmomentensteuereinrichtung das Bremsmoment so steuern, daß die höchstzulässige Temperatur an der Bremseinheit nicht überschritten wird. Statt dessen oder zusätzlich dazu kann die Warnanlage bei Eintritt der genannten höchstzulässigen Temperatur in Funktion gesetzt werden.

Sind wenigstens zwei Bremseinheiten vorhanden (z.B. zwei Radbremsen einer Fahrzeugbremsanlage), die jeweils wenigstens ein eigenes temperaturabhängiges Meßglied mit zugeordneter Auswerteeinrichtung und jeweils eine eigene Bremsmomentensteuereinrichtung besitzen, so kann die Vergleichseinrichtung so ausgebildet sein, daß sie die von den Auswerteeinrichtungen stammenden Ausgangssignale miteinander vergleicht und das der niedrigeren Temperatur entsprechende als Sollwert heranzieht. In diesem Fall kann die der Bremseinheit mit der höheren Temperatur zugeordnete Bremsmomentensteuereinrichtung das Bremsmoment dieser Bremseinheit so mindern, daß sich an allen Bremseinheiten im wesentlichen die gleiche Temperatur einstellt. Gleichzeitig kann aber auch die der Bremseinheit mit der niedrigeren Temperatur zugeordnete Bremsmomentensteuereinrichtung das Bremsmoment dieser Bremseinheit erhöhen, derart, daß ebenfalls beide Bremseinheiten im wesentlichen die gleiche Temperatur einnehmen, die in diesem Fall aber höher ist als die ursprüngliche niedrigere Temperatur. Auf diese Weise können beispielsweise die Radbremsen auf beiden Seiten einer Fahrzeugachse auf gleichmäßige Bremsmomentenabgabe geregelt werden. Damit wird ein Schiefziehen vermieden und ein gleichmäßiger Belagverschleiß erzielt.

Im eben beschriebenen Fall können auch Gruppen von Bremseinheiten gebildet werden, wobei jeder Gruppe eine Bremsmomentensteuereinrichtung zugeordnet ist und wobei die Ausgangssignale der temperaturabhängigen Meßglieder oder der Auswerteeinrichtungen jeder Bremseinheit der Gruppe in den Auswerteeinrichtungen oder der Vergleichseinrichtung gemittelt werden und der Mittelwert von der Vergleichseinrichtung als Sollwert herangezogen wird. Auf diese Weise können beispielsweise beim Mehrachsaggregat eine Fahrzeuges, wie vorstehend für einzelne Bremseinheiten beschrieben, die zu Gruppen zusammengefaßten Radbremsen auf beiden Fahrzeugseiten mittels Steuerung der Bremsmomente auf gleiche Temperatur der Bremseinheiten geregelt werden. Die genannte Zusammenfassung von Bremseinheiten in Gruppen hat den Vorteil, daß die Anzahlen der Regelkanäle oder Regelkreise der Vergleichseinrichtung und der Bremsmomentensteuereinrichtungen begrenzt werden.

Die eingangs erwähnte Einrichtung kann auch einen Speicher aufweisen. In diesem Speicher kann ein Kennfeld des Bremsmomentes und/oder das Bremsmoment kennzeichnender Größen—z.B. Bremsdruck oder Strom des Stellmagneten—in Abhängigkeit von der Temperatur der Bremseinheit und/oder diese Temperatur kennzeichnender Größen gespeichert sein. Die Vergleichseinrichtung kann in diesem Fall so ausgebildet sein, daß sie dem Speicher als Sollwert einen Wert entnimmt, der der dem jeweiligen Bremsmoment zugeordneten Temperatur entspricht. Damit läßt sich eine ständige Überwachung der Bremseinheit oder Bremseinheiten und im Falle von Abweichungen vom Kennfeld eine Betätigung der Warnanlage und/oder eine geeignete Bremsmomentenregelung, insbesondere im Sinne des Verhinderns eines Überschreitens der höchstzulässigen Temperatur, bewirken.

In dem Speicher können die bei einer Bremsbetätigung gewonnenen Ausgangssignale der Vergleichseinrichtung zwischengespeichert und bei einer oder mehreren folgenden oder beliebig späteren Bremsbetätigungen von der Vergleichseinrichtung als Sollwerte dem Speicher wieder entnommen werden. Auf diese Weise besteht beispielsweise die Möglichkeit, auch in Fällen trägheitsbehafteter Temperaturerfassung eine temperaturabhängige Bremsmomentenregelung nach den vorstehend beschriebenen Gesichtspunkten durchzuführen. Der Speicher und/oder die Auswerteeinrichtung können aus den Ausgangssignalen der Vergleichseinrichtung mehrerer früherer Bremsungen auch einen Mittelwert als Sollwert bilden. Eine andere Möglichkeit, einer entwaigen Trägheit der Temperaturerfassung Rechnung zu tragen, ist, das Bremsmoment nicht kontinuierlich nach der Temperatur zu regeln, sondern die Bremsmomentenregelung in Stufen vorzunehmen und dazu beispielsweise in der Vergleichseinrichtung entsprechende Zeitglieder vorzusehen.

Eine Einrichtung mit den vorstehend beschriebenen Eigenschaften und Einsatzmöglichkeiten kann auch mit anderen Einrichtungen zur Regelung bzw. Steuerung des oder der von einer oder mehreren Bremseinheiten erzeugten Bremsmomente zusammenarbeiten.

So wird in der Regel einer oder mehreren Bremseinheiten wenigstens eine Betätigungseinrichtung zur willkürlichen Einstellung des Bremsmomentes zugeordnet sein. Betätigungseinrichtungen dieser Art können beispielsweise der Betriebs- oder der Hilfs-bremswertgeber einer Fahrzeugbremsanlage oder der Bremsschalter oder Bremsregler eines beliebigen abzubremsenden Gerätes oder Gerätes mit abzubremsenden Elementen (z.B. Hebezeug) sein. Der mit der Betätigungseinrichtung angestrebten Einstellung des Bremsmomentes kan sich die von der beschriebenen Einrichtung ausgelöste Bremsmomentenregelung überlagern.

Insbesondere in Fahrzeugbremsanlagen kann darüber hinaus wenigstens eine zweite Auswerte/Vergleichseinrichtung—gegebenenfalls mit einem oder mehreren Speichern—vorhanden sein, die von bestimmten Fahrzeugkennwerten abhängige Ausgangssignale zur Bremsmomentensteuereinrichtung abgibt und damit die willkürliche Bremsmomenteneinstellung überlagert. Als solche Fahrzeugkennwerte können beispielsweise dienen der Beladungszustand des vollständigen Fahrzeuges oder einzelner Achsen oder Achsgruppen, der Radschlupf, die Bremsverzögerung, ein Retardermoment. Der von dieser

zweiten Auswerte/Vergleichseinrichtung ausgelösten Bremsmomentenregelung muß sich die von der eingangs erwähnten Einrichtung ausgelöste Bremsmomentenregelung überlagern oder anpassen oder unterordnen. Die zu diesem Zweck erforderlichen Programme und Logikschaltungen können in der Vergleichseinrichtung und/oder der zweiten Auswerte/Vergleichseinrichtung und/oder ihren Speichern untergebracht sein.

Insbesondere können die Bremsmomentensteuereinrichtung und/oder die Vergleichseinrichtung so ausgebildet sein, daß in vorbestimmten Bereichen von Werten des Ausgangssignals der zweiten Auswerte/Vergleichseinrichtung die von der Temperatur der Bremseinheit(en) abhängige Bremsmomentenregelung abgeschaltet wird. In einer bevorzugten Ausführungsform kann die temperaturabhängige Bremsmomentenregelung im Teilbremsbereich wirken, während sie im Vollbremsbereich zugunsten einer beladungszustandabhängigen (lastabhängigen) Bremsmomentenregelung durch die zweite Auswerte/Vergleichseinrichtung abgeschaltet wird. Auf diese Weise kann der Teilbremsbereich zur Abstimmung des Belagverschleißes an verschiedenen Radbremsen, insbesondere denen einer Achse herangezogen werden, während im Vollbremsbereich das volle lastabhängig übertragbare Bremsmoment ausgenutzt werden kann.

Im Falle als Reibungsbremse(n) entsprechend der oben gegebenen Definition ausgebildeter Bremseinheit(en) kann in die eingangs erwähnte Einrichtung und/oder—soweit vorhanden—in die zweite Auswerte/Vergleichseinrichtung eine vom dem Bremsbelagverschleiß abhängige Bremsmomentenregelung integriert oder zusätzlich vorgesehen werden. Zu diesem Zweck kann in einem oder mehreren Bremsbelagträgern jeder Bremseinheit oder Gruppe von Bremseinheiten wenigstens ein Abstandssensor angeordnet sein, der bei einer Bremsbetätigung seinen Abstand zum abbremsbaren Element, vorzugsweise dessen Oberfläche, mißt und ein diesem Abstand entsprechendes Ausgangssignal als Verschleißwertsignal zu der Auswerteeinrichtung und/oder der Vergleichseinrichtung und/oder—soweit vorhanden—zu der zweiten Auswerte/Vergleichseinrichtung und/oder zu einer etwa vorhandenen eigenen Auswerte/Vergleichseinrichtung abgibt. Die in Frage kommende der genannten Einrichtungen ist dann so—gegebenenfalls zusätzlich—ausgebildet, daß sie—gegebenenfalls zusätzlich—dem Verschleißwertsignal entsprechende Ausgangssignale zu der Signalverarbeitungseinrichtung und/oder dem Speicher bzw. zu der Bremsmomentensteuereinrichtung abgibt. Auf diese Weise kann das Bremsmoment zusätzlich—sei es sofort oder nach Zwischenspeicherung der genannten Ausgangssignale bei einer oder mehreren folgenden Bremsbetätigungen—auch abhängig von dem Verschleißwertsignal geregelt werden. Gleichzeitig kann ein dem Verschleißwertsignal entsprechender Wert in einer Verschleißanzeigeeinrichtung angezeigt werden und/oder Erreichen eines Höchstverschleißwertes eine Verschleißwarnanlage betätigt werden.

In einer bevorzugten Ausführungsform können der Abstandssensor und der Temperatursensor baulich vereinigt sein.

Das—wie weiter oben beschrieben—von dem temperaturabhängigen Meßglied oder der zugeordneten Auswerteeinrichtung gelieferte Ausgangssignal kann im Falle einer als Reibungsbremse ausgebildeten Bremseinheit auch als Verschleißwertsignal zur Verschleißanzeige und/oder zur Verschleißwarnung und/oder zum Verschleißausgleich zwischen wenigstens zwei Bremseinheiten oder wenigstens zwei Bremsbelägen einer Bremseinheit herangezogen werden. Bei einer gegebenen Konstruktiven Ausbildung der Bremseinheit und bei gegebener Lage des temperaturabhängigen Meßglieds relativ zur Eingriffsfläche von Bremsbelag und abbremsbaren Element besteht zwischen Bremsbelagdicke, Bremsmoment und Bremsbelagtemperatur ein fester Zusammenhang. Bei gegebenem Bremsmoment stellt sich am temperaturabhängigen Meßglied bei stärker verschlissenem, also dünnerem, Bremsbelag eine höhere Temperatur als bei weniger verschlissenem, also dickerem, Bremsbelag ein. Zwecks Ausnutzung dieses Zusammenhangs im eben erwähnten Sinne muß in wenigstens einem der bereits erwähnten Speicher und/oder einem zusätzlichen Speicher ein Kennfeld der Zuordnung der genannten Größe oder entsprechender Größen gespeichert werden. Anhand dieses Kennfels können die Signalverarbeitungseinrichtung, insbesondere wenn als Warnanlage ausgebildet, und/oder die Vergleichseinrichtung und/oder die zweite Auswerte/Vergleichseinrichtung und/oder eine zusätzliche Vergleichseinrichtung temperaturabhängige Verschleißwertsignale bilden. Die Warnanlage kann, wenn das Verschleißwertsignal einem höchstzulässigen Verschleißwert entspricht, ein Warnsignal abgeben. Die in Frage kommende der genannten Vergleichseinrichtungen kann gleichzeitig Ausgangssignale an die Bremsmomentensteuereinrichtung(en) geben, aufgrund derer diese das Bremsmoment der jeweils zugeordneten Bremseinheit oder Gruppe von Bremseinheiten mindern. Der zuletzt geäußerte Gedanke läßt sich insbesondere dann vorteilhafte anwenden, wenn in einer der genannten Vergleichseinrichtungen die temperaturabhängigen Verschleißwertsignale wenigstens zweier Bremseinheiten oder Gruppen von Bremseinheiten verglichen und die der wärmeren Bremseinheit oder Gruppe von Bremseinheiten zugeordnete Bremsmomentensteuereinrichtung oder beide Bremsmomentensteuereinrichtungen im Sinne einer Angleichung der Temperaturen der Bremseinheiten oder Gruppen von Bremseinheiten und damit im Sinne eines Bremsbelagverschleißausgleichs gesteuert werden.

Auch in den zuletzt genannten Fällen läßt sich, wenn die Temperaturerfassung trägheitsbehaftet ist, die beschriebene Bremsmomentenregelung nach Zwischenspeicherung der Ausgangssignale der Vergleichseinrichtung bei einer oder mehreren folgenden oder späteren Bremsbetätigungen oder in Stufen vornehmen.

Sämtliche vorstehend erwähnten Meßglieder, Sensoren, Speicher, Auswerteeinrichtungen, Vergleichseinrichtungen, Auswerte/Vergleichseinrichtungen können in bevorzugten Ausführungsformen elektrisch/elektronisch ausgebildet sein. Sie können in ebenfalls bevorzugten Ausführungsformen ganz oder teilweise baulich miteinander vereinigt sein.

Aufgrund vorstehend beschriebener Eigenschaften läßt sich die Erfindung vorteilhaft, aber nicht ausschließlich, in einer Fahrzeugbremsanlage eines Fahrzeuges oder einer Fahrzeug-Kombination, insbesondere für Straßenverkehr, im folgenden als Fahrzeug bezeichnet, mit wenigstens zwei jeweils als Bremseinheit dienenden Radbremsen oder Gruppen von Radbremsen, im folgenden als Radbremse(n) bezeichnet, verwenden. Dabei können die Radbremsen beispielsweise in bekannter Weise als Reibungsbremse mit wenigstens einem wenigstens einen Bremsbelag aufweisenden Bremsbelagträger ausgebildet sein. In bevorzugten Ausführungsformen können die Radbremsen in bekannter Weise als Trommelbremsen oder Teilscheibenbremsen oder Vollscheibenbremsen ausgebildet sein.

Die Erfindung wird nachstehend anhand eines in der Zeichnung dargestellten Ausführungsbeispiels erläutert.

Die Zeichnung zeigt schematisiert eine Bremsanlage eines Dreiachs-Kraftfahrzeuges.

In der folgenden Erläuterung des Ausführungsbeispiels stehen in den Bezugszeichen stets "a" für die rechte, "b" für die linke Fahrzeugseite Das mit der dargestellten Bremsanlage ausgerüstete Fahrzeug weist eine Vorderachse und zwei zu einem Hinterachsaggregat zusammengefaßte Hinterachsen auf. Als Bremseinheiten weist das Fahrzeug als Trommel- oder Teilscheiben- oder Vollscheibenbremsen ausgebildete Radbremsen der Bauart Reibungsbremsen auf, die für die Vorderachse durch ihre Zuspanneinrichtungen 4a, 4b, für die erste Hinterachse durch ihre Zuspanneinrichtung 12a, 12b und für die zweite Hinterachse durch deren Zuspanneinrichtungen 13a, 13b, symbolisiert sind. Die Zuspanneinrichtungen können als Druckmittelzylinder oder als kraftabgebende Stellmagnete ausgebildet sein.

Die Energieversorgung der Zuspanneinrichtungen erfolgt für die Vorderachse aus einer Energiequelle 1 und für die Hinterachse aus einer Energiequelle 18. Die Energiequellen sind je nach Ausbildung der Zuspanneinrichtungen als Druckmittelbeschaffungsanlagen oder Elektrogeneratoren, worunter auch elektrische Batterien verstanden sein sollen, ausgebildet.

Die Energiezuleitungen zwischen Energiequellen und Zuspanneinrichtungen sind in der Zeichnung durch durchgezogene Linien angedeutet.

An der Vorderachse ist in der Energiezuleitung jeder Zuspanneinrichtung 4a, 4b, je eine Bremsmomentensteuereinrichtung 5a, 5b, angeordnet. An der Hinterachse ist in der Energiezuleitung zu den Zuspanneinrichtungen jeder Fahrzeugseite 12a, 13a bzw. 12b, 13b jeweils eine Bremsmomentensteuereinrichtung 14a, 14b angeordnet. Die Radbremsen des Hinterachsaggregates sind dadurch zu einer durch die Zuspanneinrichtungen 12a, 13a symbolisierten Gruppe für die rechte und einer durch die Zuspanneinrichtungen 12b, 13b symbolisierten Gruppe für die linke Fahrzeugseite zusammengefaßt.

Die Bremsmomentensteuereinrichtungen sind elektrisch stufenlos steuerbar und ermöglichen eine Energiebeaufschlagung der Zuspanneinrichtungen in stufenlos einstellbarer Stärke zwischen Null und einem von den Energiequellen als Höchstwert lieferbaren Vorratswert. Das von jeder Radbremse erzeugte Bremsmoment ist, abgesehen von Ansprechwiderständen, Hysteresen und anderen üblichen Eigenschaften der genannten Bremsenbauart, dem der zugeordneten Zuspanneinrichtung zugeführten Energieniveau im wesentlichen proportional. Veränderungen des genannten Energieniveaus und des Bremsmomentes verlaufen also im wesentlichen gleichsinnig.

Durch die getrennte Energieversorgung ist die dargestellte Bremsanlage zweikreisig mit einem Vorderachs- und einem Hinterachs-Bremskreis.

Zur Steuerung der Bremsmomentensteuereinrichtungen sind ein Bremswertgeber 9 und eine sich aus einer Elektronik 10 und Sensoren 2a, 2b, 3a, 3b, 8, 15a, 15b, 16a, 16b, 17a, 17b, 19, 21, 22 sowie einer nicht dargestellten Energieversorgungseinrichtung zusammensetzende elektronische Regeleinrichtung vorgesehen.

Die strichpunktierten Linien stellen in der Zeichnung die elektrischen Verbindungen zwischen den erwähnten elektrischen/elektronischen Bauteilen der Bremsanlage dar.

In der Elektronik 10 sind eine oder mehrere Auswerteeinrichtungen 6, 11, in denen von den Sensoren und vom Bremswertgeber 9 abgegebene Ausgangssignale aufbereitet werden, und eine oder mehrere Vergleichseinrichtungen 7 sowie ein oder mehrere nicht näher bezeichnete Speicher zusammengefaßt.

Der Bremswertgeber 9 ist vom Fahrer des Fahrzeuges—etwa über ein Pedal—willkürlich betätigbar und liefert von der Betätigungskraft oder dem Betätigungsweg abhängige elektrische Ausgangssignale, die der Auswerteeinrichtung 6, 11 der Elektronik 10 zugeführt werden.

Die Sensoren 3a, 3b, 15a, 15b, 16a, 16b sind als elektrische temperaturabhängige Meßglieder, im folgenden Temperatursensoren genannt, ausgebildet. Sie sind jeweils in einem Bremsbelagträger einer Radbremse derart angeordnet, daß sie die Temperatur eines mit dem Bremsbelagträger verbundenen Bremsbelags erfassen. Die Temperatursensoren sind dabei im Bremsbelagträger so angeordnet, daß sie in dem Bremsbelag eingebettet sind. Dadurch besteht die Möglichkeit, die Temperatursensoren auch als Verschleißwertgeber zu verwenden.

Die Temperatursensoren 3a, 3b sind jeweils an einem Bremsbelagträger der Vorderachs-Radbremsen, die Temperatursensoren 15a, 15b, jeweils an einem Bremsbelagträger der Radbremsen der ersten Hinterachse und die Temperatursensoren 16a, 16b jeweils an einem Bremsbelagträger der zweiten Hinterachse angeordnet. Jedem der genannten Temperatursensoren ist in der Auswerteeinrichtung 6, 11 der Elektronik 10 eine eigene Auswerteeinrichtung zugeordnet, deren Ausgangssignale der Vergleichseinrichtung 7 zugeführt werden. Die den Temperatursensoren 15a, 16a einerseits und 15b, 16b andererseits zugeordneten Auswerteeinrichtungen sind dabei so ausgebildet, daß sie aus den Ausgangssignalen der zugeordneten Temperatursensoren einen Mittelwert und daraus ihre eigenen Ausgangssignale zur Vergleichseinrichtung bilden.

Die Sensoren 2a, 2b sind als Radschlupfsensoren für jede Seite der Vorderachse, die Sensoren 17a, 17b als solche für jede Seite einer Hinterachse ausgebildet. Der Sensor 8 sensiert die Fahrzeugverzögerung, der Sensor 21 sensiert ein Retardermoment, während die Sensoren 22 und 19 als Achslastsensoren der Vorderachse bzw. der Hinterachse ausgebildet sind. Auch die Signale der eben genannten Sensoren werden in der Auswerteeinrichtung 6, 11 zu eigenen Ausgangssignalen derselben aufbereitet und als solche der Vergleichseinrichtung 7 der Elektronik 10 zugeführt. Die Elektronik 10 beinhaltet also außer dem oder den Speichern die den Temperatursensoren 3a, 3b, 15a, 16a, 15b, 16b zugeordneten Auswerteeinrichtungen, die den temperaturabhängigen Ausgangssignalen der Auswerteeinrichtungen zugeordnete Vergleichseinrichtung und eine die Signale der anderen erwähnten Sensoren verarbeitende zweite Auswerte/Vergleichseinrichtung. Die letztgenannte verarbeitet auch die Signale des Bremswertgebers und ist auch als Verschleißregeleinrichtung ausgebildet.

Jede Bremsmomentensteuereinrichtung stellt also eine Signalverarbeitungseinrichtung für die von der Vergleichseinrichtung abgegebenen Ausgangssignale dar.

Mit 20 ist ein Kombiinstrument bezeichnet, welches einerseits mit den den Temperatursensoren 3a, 3b, 15a, 16a, 15b, 16b zugeordneten Auswerteeinrichtungen und andererseits mit der Vergleichseinrichtung 7 elektrisch verbunden ist. Über seine Verbindung mit der Vergleichseinrichtung dient das Kombiinstrument 20 als Warnanlage und damit als weitere Signalverarbeitungseinrichtung. Über seine Verbindung mit den genannten Auswerteeinrichtungen dient das Kombiinstrument 20 als Anzeigeeinrichtung.

Bei Betätigung der vorstehend beschriebenen Bremsanlage wirken der Fahrer über den Bremswertgeber 9 und die zweite Auswerte/Vergleichseinrichtung der Elektronik 10 in Verbindung mit den Radschlupf-, Retardermoment, Achslast- und Fahrzeugverzögerungssensoren in bekannter Weise als Bremsmomentenregelsystem mit lastabhängiger und vor Radblockieren schützender Bremsmomentenregelung zusammen. Zu diesem Zweck wertet die zweite Auswerte/Vergleichseinrichtung die vom Bremswertgeber 9 und den weiteren erwähnten Sensoren erhaltenen Signale aus und erzeugt nach eingespeicherten Programmen für jede Bremsmomentensteuereinrichtung 5a, 5b, 14a, 14b ein von diesen Signalen abhängiges individuelles Ausgangssignal, nach dessen Stärke die jeweilige Bremsmomentensteuereinrichtung die Energiezufuhr der zugeordneten Radbremse oder Gruppe von Radbremsen steuert.

Die vorstehend beschriebene Bremsmomentenregelung wird in nachstehend beschriebener Weise von einer von der Bremsbelagtemperatur abhängigen Bremsmomentenregelung teils überlagert, teils ersetzt.

Die Vergleichseinrichtung ist—gegebenenfalls unter Heranziehung von in der Elektronik 10 vorhandenen Speichern—so ausgebildet, daß sie die von den den Temperatursensoren zugeordneten Auswerteeinrichtungen empfangenen Auswertesignale mit Sollwerten vergleicht und bei Abweichungen von den Sollwerten in negativem Sinne Ausgangssignale zu den Bremsmomentensteuereinrichtungen direkt oder zur zweiten Auswerte/Vergleichseinrichtung abgibt, welche eine Umsteuerung der Bremsmomentensteuereinrichtung im Sinne einer Beseitigung der Abweichung bewirken.

Als Sollwerte ist der Vergleichseinrichtung einerseits für jeden von einem Temperatursensor überwachten Bremsbelag ein zulässiger Temperaturhöchstwert eingespeichert. Für den Hinterachs-Bremskreis bezieht sich dieser Höchstwert auf den obenerwähnten Temperaturmittelwert. Wird dieser Temperaturhöchstwert an einem Bremsbelag erreicht, setzt die Vergleichseinrichtung die Warnanlage des Kombiinstruments 20 in Gang. Die Vergleichseinrichtung kann so ausgebildet sein, daß sie gleichzeitig das der betreffenden Bremsmomentensteuereinrichtung zugeführte Signal im Sinne einer Verringerung der Energiezufuhr zur zugeordneten Zuspanneinrichtung und damit im Sinne einer Bremsmomentenreduzierung anpaßt. Diese Anpassung kann auch achsweise erfolgen. Ist diese Art der Anpassung vorgesehen, so muß durch entsprechende Ausbildung der Vergleichseinrichtung oder anderer Bestandteile der Elektronik 10 sichergestellt sein, daß dadurch nicht in unerwünschter Weise eine Reduzierung des Bremsmomentes verursacht wird, etwa in einer kritischen Verkehrssituation.

Die Vergleichseinrichtung ist außerdem so ausgebildet, daß sie die von den der Vorderachse zugeordneten Auswerteeinrichtungen gelieferten Ausgangssignale miteinander vergleicht. Signalisieren diese Ausgangssignale auf beiden Fahrzeugseiten unterschiedliche Bremsbelagtemperaturen und befindet sich die radschlupfabhängige-Bremsmomentenregelung nicht gerade in einer Regelphase, so zieht die Vergleichseinrichtung das die niedrigere Bremsbelagtemperatur signalisierende Ausgangssignal als Sollwert heran. Entsprechendes gilt für die hinsichtlich der Hinterachsbremsen gebildeten Mittelwerte. Die Vergleichseinrichtung ist weiter so ausgebildet, daß sie die den Bremsmomentensteuereinrichtungen der Vorderachse und der Hinterachse zugehenden Ausgangssignale so anpaßt, daß die Bremsmomente auf beiden Fahrzeugseiten so geregelt werden, daß sich an den Bremsbelägen auf beiden Fahrzeugseiten im wensentlichen die gleiche Temperatur einstellt. Das Bremsmoment auf der Fahrzeugseite mit der ursprünglich niedrigeren Bremsbelagtemperatur wird also erhöht, dasjenige auf der anderen Fahrzeugseite gemindert, so daß die Bremsbeläge auf beiden Fahrzeugseiten eine Temperatur annehmen, die zwischen der ursprünglich höheren und der ursprünglich niedrigeren Temperatur liegt. Bei dieser gleichzeitigen Regelung der Bremsmomente beider Fahrzeugseiten bleibt das Gesamtbremsmoment der Achse im wesentlichen erhalten.

Im vorstehend erwähnten Fall kann auch nur das Bremsmoment auf der Fahrzeugseite mit der höheren Bremsbelagtemperatur gemindert werden, so daß die höhere Bremsbelagtemperatur auf den an der anderen Fahrzeugseite gemessenen Wert abfällt. Dabei würde das Gesamtbremsmoment der Achse ebenfalls abfallen.

Mit der vorstehend beschriebenen Regelung der Bremsmomente auf beiden Fahrzeugseiten einer Achse auf gleiche Bremsbelagtemperatur wird, außer wenn die radschlupfabhängige Bremsmomentenregelung in einer Regelphase ist, eine ungleichmäßige Bremsmomentenerzeugung auf beiden Fahrzeugseiten einer Achse und damit Schiefziehen und ungleichmäßiger Bremsbelagverschleiß vermieden.

Da die Erfassung der Bremsbelagtemperatur un ihrer Änderungen durch den Temperatursensor träge verläuft, erfolgen die vorstehend beschriebenen Anpassungen des Bremsmomentes nicht unmittelbar. Die zum Zwecke dieser Anpassung von der Vergleichseinrichtung erzeugten Ausgangssignale werden zunächst zwischengespeichert und bei folgenden Bremsbetätigungen zur Anpassung des Bremsmomentes herangezogen.

Eine andere Art, der Trägheit der genannten Temperaturerfassung Rechnung zu tragen, wäre, die temperaturabhängigen Ausgangssignale der Auswerteeinrichtung der Vergleichseinrichtung nicht kontinuierlich, sondern als Impulse zuzuführen und das Ausgangssignal der Vergleichseinrichtung zwischen je zwei Impulsen konstant zu halten. Auf diese Weise würde die beschriebene Anpassung des Bremsmomentes in Stufen erfolgen.

In einem Speicher der Elektronik 10 ist für die Radbremsen der Vorderachse und die seitenweise gebildeten Gruppen von Radbremsen der Hinterachse je ein Kennfeld der Zuordnung von Bremsbelagtemperatur (bzw. Mittelwert der Bremsbelagtemperaturen jeder Fahrzeugseite an der Hinterachse), Bremsbelagdicke und Stärke des der Bremsmomentensteuereinrichtung zugeführten Signals der Elektronik 10 gespeichert.

Diesem Kennfeld entnimmt die Vergleichseinrichtung bei jeder Bremsbetätigung oder nach einer vorbestimmten Anzahl Bremsbetätigungen für das jeweils der Bremsmomentensteuereinrichtung zugeführte Signal den Sollwert der Bremsbelagtemperatur, vergleicht ihn mit der Ist-Temperatur und setzt bei unzulässigen Abweichungen die Warnanlage des Kombiinstrumentes 20 in Gang. Auf diese Weise ist eine ständige Überwachung der Radbremsen auf einwandfreie Funktion (beispielsweise einwandfreies Bremslösen) gewährleistet.

Die Auswerteeinrichtung ist aufgrund dieses eingespeicherten Kennfelds in der Lage, aus dem vom Temperatursensor abgegebenen temperaturabhängigen Ausgangssignal ein entsprechendes Bremsmomentensignal zu bilden, welches der Anzeigeeinrichtung des Kombiinstrumentes 20 zugeführt und von dieser als Wert des gerade erzeugten Bremsmomentes angezeigt wird. Die Anzeigeeinrichtung kann für jede Radbremse bzw. Gruppe von Radbremsen einen eigenen Bremsmomentenanzeiger oder auch nur einen einzigen Bremsmomentenanzeiger, welcher auf die verschiedenen Radbremsen bzw. -gruppen von Radbremsen umschaltbar ist, aufweisen. Auch diese Anzeige bietet die Möglichkeit einer ständigen Kontrolle der Funktion der Radbremsen.

Anhand des genannten Kennfelds bildet die Elektronik 10 in einem entsprechend ausgebildeten Teil aus der Stärke des der Bremsmomentensteuereinrichtung zugeführten Signals und der jeweils signalisierten Bremsbelagtemperatur ein die Bremsbelagdicke und damit deren Verschleiß kennzeichnendes Verschleißwertsignal. Insofern sind die Temperatursensoren zugleich Verschleißwertgeber. Das Verschleißwertsignal wird ebenfalls zur Betätigung der oder einer anderen im Kombiinstrument 20 angeordneten Warnlage herangezogen. Das Kombiinstrument 20 kann auch eine auf die verschiedenen Radbremsen umschaltbare oder für jede Radbremse eine eigene Anzeigeeinrichtung für den Bremsbelagverschleiß, welche das Verschleißwertsignal in Skalenwerte umsetzen, aufweisen.

Die weiter oben beschriebene Anzeige des Bremsmomentes kann, wenn zwischen Bremsbelagtemperatur und Bremsmoment ein linearer Zusammenhang besteht, auch durch direkte Auswertung der temperaturabhängigen Ausgangssignale der Temperatursensoren in der Anzeigeeinrichtung (z.B. in Bremsmomenteneinheiten geeichte Temperaturanzeiger) erfolgen.

Eine Warnung bei Eintritt eines höchstzulässigen Bremsbelagverschleißes kann auch in der Weise erfolgen, daß der Temperatursensor bei Eintritt dieses höchstzulässigen Verschleißes mit der als abbremsbares Element ausgebildeten Bremstrommel oder Bremsscheibe in Berührung kommt. Das abbremsbare Element muß in diesem Falle leitend und in dem Schaltkreis der Warnanlage des Anzeigeinstruments 20 angeordnet sein. Durch die erwähnte Berührung würde der Schaltkreis geschlossen und die Warnanlage betätigt werden.

Der Temperatursensor kann auch zugleich als Abstandssensor ausgebildet sein, der bei jeder oder nach jeder vorbestimmten Anzahl von Bremsbetätigungen seinen Abstand der Bremstrommel oder der Bremsscheibe und damit den Bremsbelagverschleiß sensiert, und aus dem gemessenen Abstand Verschließwertsignale bildet, mittels derer die Warnanlage und/oder die bereits erwähnte Verschließwertanzeigeeinrichtung betätigbar sind. Die Verschließwertsignale der Radbremsen beider Fahrzeugseiten einer Achse können in der Elektronik 10 auch miteinander verglichen werden, wobei die Elektronik 10 die Bremsmomentensteuereinrichtungen beider Fahrzeugseiten im Sinne einer Verschleißanpassung der Bremsbeläge beider Fahrzeugseiten steuern kann. Es liegt auf der Hand, daß als Abstandssensoren ausgebildete Vergleichswertgeber auch zusätzlich zu den Temperatursensoren in dem oder den Bremsbelagträgern angeordnet sein können. Die Elektronik 10, insbesondere die darin enthaltene zweite Auswerte/Vergleichseinrichtung, ist schließlich noch so ausgebildet, daß sie von der Vergleichseinrichtung abgegebene Ausgangssignale zur Bremsmomentenanpassung nur verwertet, solange die vom Bremswertgeber 9 in Verbindung mit den Achslastsensoren, dem Retardermomentsensor und dem Fahrzeugverzögerungssensor gebildeten Signale für die Bremsmomentensteuereinrichtungen unterhalb eines bestimmten Grenzwertes, der im vorliegenden Fall für Vorderachse und Hinterachse unterschiedlich ausgelegt ist, liegen. Auf diese Weise ist sichergestellt, daß die von den Bremsbelagtemperaturen ausgelöste Bremsmomentenanpassung nur im Teilbremsbereich und nicht in kritischen Bremssituationen stattfindet.

Die Bremsanlage nach dem Ausführungsbeispiel kann auch in einem Fahrzeuganhänger angeordnet sein, insbesondere wenn dieser mit dem die Bremsanlage nach dem Ausführungsbeispiel aufweisenden Zugfahrzeug eine Fahrzeug-Kombination bildet. In für den Fachmann offensichtlicher Weise müßte beim Einsatz der genannten Bremsanlage in einem Anhänger der Bremswertgeber 9 als vom Zufahrzeug gesteuertes Anhängerbremsventil ausgebildet sein.

Alle vorstehenden Erläuterungen gelten für ein Fahrzeug mit einkreisiger Bremsanlage, wie es insbesondere als Anhänger ausgeführte wird, entsprechend.

Es liegt auf der Hand, daß die beschriebene von der Bremsbelagtemperatur abhängige Bremsmomentenanpassung auch ausführbar ist, ohne daß eine von anderen Fahrzeugkennwerten abhängige Regeleinrichtung vorhanden ist. In diesem Falle würden die Ausgangssignale der Vergleicheinrichtung den Bremsmomentensteuereinrichtungen direkt zugeführt werden. Auch müßten in diesem Fall alle weiteren, im vorliegenden Fall in anderen Teilen der Elektronik 10 angeordneten Einrichtungen wie Speicher, Vorranglogiken und dgl. in der Verleichseinrichtung angeordnet sein.

**Patentansprüche**

1. Einrichtung zum Messen eines von einer Bremseinrichtung auf ein abbremsbrres Element übertragenen Bremsmomentes, wobei die Bremseinrichtung und das abbremsbare Element eine Bremseinheit (4a, 4b, 12a, 12b, 13a, 13b) bilden können, dadurch gekennzeichnet, daß an dem abbremsbaren Element und/oder der Bremseinrichtung wenigstens ein temperaturabhängiges Meßglied (3a, 3b, 15a, 15b, 16a, 16b) angeordnet ist, dessen Ausgangssignal einer Auswerteeinrichtung (6, 11) zugeführt wird, die daraus ein den entsprechenden Bremsmomentwert verkörperndes Ausgangssignal bildet.

2. Einrichtung nach Anspruch 1, gekennzeichnet durch folgende Merkmale:

a) es ist eine Vergleichseinrichtung (7) vorgesehen, die zum Vergleich des von der Auswerteeinrichtung (6, 11) abgegebenen Ausgangssignales mit wenigstens einem vorgegebenen Sollwert und zur Ausgabe eines dem Vergleichsergebnis entsprechenden Ausgangssignals dient;

b) das Ausgangssignal der Vergleichseinrichtung (7) wird einer Signalverarbeitungseinrichtung und/oder einem Speicher zugeführt.

3. Einrichtung nach Anspruch 2, dadurch gekennzeichnet, daß die Signalverarbeitungseinrichtung als Bremsmomentensteuereinrichtung (5a, 5b, 14a, 14b) ausgebildet ist, welche das Bremsmoment nach Maßgabe des Ausgangssignals der Vergleichseinrichtung (7) steuert.

4. Einrichtung nach Anspruch 3, gekennzeichnet durch folgende Merkmale:

Die Einrichtung ist in einer Fahrzeugbremsanlage eines Fahrzeugs oder einer Fahrzeugkombination, insbesondere für Straßenverkehr, im folgenden als Fahrzeug bezeichnet, mit wenigstens zwei jeweils als Bremseinheit dienenden Radbremsen oder Gruppen von Radbremsen, im folgenden als Radbremse(n) bezeichnet, angeordnet, wobei die Fahrzeugbremsanlage je Radbremse eine Bremsmomentensteuereinrichtung (5a, 5b, 14a, 14b) und wenigstens eine zweite Auswerte/Vergleichseinrichtung, welche von bestimmten Fahrzeugkennwerten (z.B. Beladungszustand, Radschlupf) abhängige Ausgangssignale zu den Bremsmomentensteuereinrichtungen (5a, 5b, 14a, 14b) abgibt, und/oder wenigstens eine Betätigungseinrichtung (9) zur willkürlichen Einstellung des Bremsmomentes der Radbremsen aufweist.

5. Einrichtung nach Anspruch 4, dadurch gekennzeichnet, daß der Sollwert der Vergleichseinrichtung (7) der Temperatur der bei einem Bremsvorgang jeweils kälteren Radbremse entspricht.

6. Einrichtung nach einem der Ansprüche 4 oder 5, dadurch gekennzeichnet, daß der Sollwert der Vergleichseinrichtung (7) einem zulässigen Temperaturhöchstwert jeder Radbremse entspricht.

7. Einrichtung nach einem der Ansprüche 4 bis 6, dadurch gekennzeichnet, daß der Sollwert der Vergleichseinrichtung und/oder das von der Auswerteeinrichtung (6, 11) abgegebene Ausgangssignal dem Mittelwert der Temperaturen von wenigstens zwei Radbremsen entspricht.

8. Einrichtung nach einem der Ansprüche 2 bis 7, dadurch gekennzeichnet, daß als Sollwert das bei wenigstens einer früheren Bremsbetätigung gewonnene und bei dieser früheren Bremsbetätigung dem Speicher zugeführte Ausgangssignal der Vergleichseinrichtung (7) dieser wieder zugeführt wird.

9. Einrichtung nach einem der Ansprüche 2 bis 8, gekennzeichnet durch folgende Merkmale:

a) in dem Speicher ist ein Kennfeld des Bremsmomentes oder das Bremsmoment kennzeichnender Größen in Abhängigkeit von der Temperatur der Bremseinheit (4a, 4b, 12a, 12b, 13a, 13b) oder diese Temperatur kennzeichnender Größen gespeichert;

b) als Sollwert wird der Vergleichseinrichtung (7) aus dem Speicher ein Wert zugeführt, der der dem jeweiligen Bremsmoment zugeordneten Temperatur entspricht.

10. Einrichtung nach einem der Ansprüche 5 bis 9, gekennzeichnet durch folgende Merkmale:

Das Ausgangssignal der Vergleichseinrichtung (7) ist so ausgebildet, daß es die Bremsmomentensteuereinrichtungen (5a, 5b, 14a, 14b) derart steuert, daß diese die Bremsmomente der Radbremsen stufenlos oder abgestuft so einstellen, daß sich an diesem die gleiche Temperatur einstellen kann.

11. Einrichtung nach einem der Ansprüche 5 bis 10, gekennzeichnet durch folgende Merkmale:

Das Ausgangssignal der Vergleichseinrichtung (7) ist so ausgebildet, daß es die Bremsmomentensteuereinrichtungen (5a, 5b, 14a, 14b) derart steuert, daß der zulässige Temperaturhöchstwert jeder Radbremse nicht überschritten wird.

12. Einrichtung nach einem der Ansprüche 5 bis 11, gekennzeichnet durch folgende Merkmale:

Das Ausgangssignal der Vergleichseinrichtung (7) ist so ausgebildet, daß es die Bremsmomentensteuereinrichtungen (5a, 5b, 14a, 14b) derart steuert, daß das der jeweiligen Bremstemperatur zugeordnete Bremsmoment eingestellt wird.

13. Einrichtung nach einem der vorhergehenden Ansprüche, dadurch gekennzeichnet, daß die Bremseinheit (4a, 4b, 12a, 12b, 13a, 13b) in an sich bekannter Weise als Reibungsbremse mit wenigstens einem wenigstens einen Bremsbelag aufweisenden Bremsbelagträger ausgebildet ist.

14. Einrichtung nach den Ansprüchen 4 und Anspruch 13, dadurch gekennzeichnet, daß die Radbremsen in an sich bekannter Weise als Trommelbremsen oder Teilscheibenbremsen oder Vollscheibenbremsen ausgebildet sind.

15. Einrichtung nach Anspruch 2, gekennzeichnet durch die folgenden Merkmale:

a) der Sollwert der Vergleichseinrichtung (7) entspricht einem zulässigen Temperatur-Höchstwert der Bremseinheit;

b) die Signalverarbeitungseinrichtung ist als Warnanlage (20) ausgebildet, welche ein Warnsignal abgibt, wenn die Temperatur der Bremseinheit den zulässigen Höchstwert erreicht.

16. Einrichtung nach einem der Ansprüche 4 bis 15, gekennzeichnet durch folgende Merkmale:

die Bremsmomentensteuereinrichtung (5a, 5b, 14a, 14b) ist so ausgebildet, daß bei vorbestimmten Werten des Ausgangssignals der zweiten

Auswerte/Vergleichseinrichtung die von der Temperatur der Bremseinheit (4a, 4b, 12a, 12b, 13a, 13b) abhängige Bremsmomentenregelung abgeschaltet wird.

17. Einrichtung nach einem der Ansprüche 4 bis 16, gekennzeichnet durch folgende Merkmale:

die Vergleichseinrichtung (7) ist so ausgebildet, daß bei vorbestimmten Werten des Ausgangssignals der zweiten Auswerte/Vergleichseinrichtung die von der Temperatur der Bremseinheit (4a, 4b, 12a, 12b, 13a, 13b) abhängige Bremsmomentenregelung abgeschaltet wird.

18. Einrichtung nach einem der vorhergehenden Ansprüche, dadurch gekennzeichnet, daß wenigstens eine der Baugruppen

temperaturabhängiges Meßglied (3a, 3b, 15a, 15b, 16a, 16b),

Auswerteeinrichtung (6, 11),

Vergleichseinrichtung (7),

zweite Auswerte/Vergleichseinrichtung,

Speicher,

elektrisch/elektronisch ausgebildet ist.

19. Einrichtung nach Anspruch 18, dadurch gekennzeichnet, daß die Baugruppen

temperaturabhängiges Meßglied (3a, 3b, 15a, 15b, 16a, 16b),

Auswerteeinrichtung (6, 11),

Vergleichseinrichtung (7),

Speicher,

zweite Auswerte/Vergleichseinrichtung wenigstens teilweise baulich vereinigt sind.

20. Einrichtung nach den Ansprüchen 13 und 18, dadurch gekennzeichnet, daß das temperaturabhängige Meßglied (3a, 3b, 15a, 15b, 16a, 16b) in dem Bremsbelagträger und/oder dem Bremsbelag angeordnet ist.

21. Einrichtung nach Anspruch 20, gekennzeichnet durch folgende Merkmale:

das temperaturabhängige Meßglied (3a, 3b, 15a, 15b, 16a, 16b) ist derart angeordnet, daß sein dem abbremsbaren Element nächster Punkt beim Eintritt eines höchstzulässigen Bremsbelagverschleißes mit dem abbremsbaren Element in Berührung kommt und dabei über dieses einen elektrischen Anzeige- und/oder Warnkreis schließt.

22. Einrichtung nach einem der Ansprüche 13 bis 21, gekennzeichnet durch folgende Merkmale:

a) in dem Bremsbelagträger oder dem Bremsbelag ist ein Abstandssensor angeordnet, der bei einer Bremsbetätigung seinen Abstand zum abbremsbaren Element mißt und ein diesem Abstand entsprechendes Ausgangssignal als Verschleißwertsignal zu der Auswerteeinrichtung (6, 11) abgibt.

b) die Auswerteeinrichtung (6, 11) ist so ausgebildet, daß sie dem Verschleißwertsignal entsprechende Werte abgibt und/oder anzeigt bzw. zur Signalverarbeitungseinrichtung (5a, 5b, 14a, 14b, 20) und/oder dem Speicher abgibt.

23. Einrichtung nach einem der Ansprüche 13 bis 22, gekennzeichnet durch folgende Merkmale:

a) in dem Bremsbelagträger oder dem Bremsbelag ist ein Abstandssensor angeordnet, der bei einer Bremsbetätigung seinen Abstand zum abbremsbaren Element mißt und ein diesem Abstand entsprechendes Ausgangssignal als Verschleißwertsignal zu der Vergleichseinrichtung (7) abgibt.

b) die Vergleichseinrichtung (7) ist so ausgebildet, daß sie dem Verschleißwertsignal entsprechende Werte abgibt und/oder anzeigt bzw. zur Signalverarbeitungseinrichtung (5a, 5b, 14a, 14b, 20) und/oder dem Speicher abgibt.

24. Einrichtung nach einem der Ansprüche 13 bis 23, gekennzeichnet durch folgende Merkmale:

a) in dem Bremsbelagträger oder dem Bremsbelag ist ein Abstandssensor angeordnet, der bei einer Bremsbetätigung seinen Abstand zum abbremsbaren Element mißt und ein diesem Abstand entsprechendes Ausgangssignal als Verschleißwertsignal zu der zweiten Auswerte/Vergleichseinrichtung abgibt.

b) die zweite Auswerte/Vergleichseinrichtung ist so ausgebildet, daß sie dem Verschleißwertsignal entsprechende Werte abgibt und/oder anzeigt bzw. zur Signalverarbeitungseinrichtung (5a, 5b, 14a, 14b, 20) und/oder dem Speicher abgibt.

25. Einrichtung nach einem der Ansprüche 22 bis 24, dadurch gekennzeichnet, daß der Abstandssensor und der Temperatursensor baulich vereinigt sind.

26. Einrichtung nach einem der Ansprüche 13 bis 25, gekennzeichnet durch folgende Merkmale:

a) in dem Speicher ist ein Kennfeld der Zuordnung vom Bremsmoment, Temperatur der Bremseinrichtung und Reibbelagdicke oder diesen Größen entsprechender Größen gespeichert;

b) der Signalverarbeitungseinrichtung (5a, 5b, 14a, 14b, 20) wird als temperaturabhängiges Verschleißwertsignal aus dem Speicher ein Wert zugeführt, der der durch das jeweilige Bremsmoment und die jeweilige Temperatur der Bremseinrichtung definierten Reibbelagdicke entspricht.

27. Einrichtung nach einem der Ansprüche 13 bis 26, gekennzeichnet durch folgende Merkmale:

a) in dem Speicher mit ein Kennfeld der Zuordnung von Bremsmoment, Temperatur der Bremseinrichtung und Reibbelagdicke oder diesen Größen entsprechender Größen gespeichert;

b) der Vergleichseinrichtung (7) wird als temperaturabhängiges Verschleißwertsignal aus dem Speicher ein Wert zugeführt, der der durch das jeweilige Bremsmoment und die jeweilige Temperatur der Bremseinrichtung definierten Reibbelagdicke entspricht.

28. Einrichtung nach einem der Ansprüche 26 und 27, gekennzeichnet durch folgende Merkmale:

a) der Vergleichseinrichtung (7) werden die temperaturabhängigen Verschleißwertsignale von wenigstens zwei Bremseinrichtungen zugeführt;

b) als Sollwert der Vergleichseinrichtung (7) dient das der jeweils größeren Reibbelagdicke entsprechende temperaturabhängige Verschleißwertsignal.

## Revendications

1. Dispositif de mesure d'un couple de freinage qu'un dispositif de freinage transmet à un élément susceptible d'être freiné, le dispositif de freinage et l'élément susceptible d'être freiné pouvant former une unité de freinage (4a, 4b, 12a, 12b, 13a, 13b), caractérisé,

par le fait qu'au moins un organe de mesure (3a, 3b, 15a, 15b, 16a, 16b) dépendant de la température est agencé sur l'élément susceptible d'être freiné et/ou sur le dispositif de freinage, le signal de sortie de cet organe étant amené à un dispositif d'interprétation (6, 11) qui, à partir de lui, forme un signal de sortie représentatif de la valeur correspondante au couple de freinage.

2. Dispositif selon la revendication 1, caractérisé par les caractéristiques suivantes:

a) il est prévu un dispositif comparateur (7) qui sert à comparer le signal de sortie fourni par le dispositif d'interprétation (6, 11) à au moins une valeur de consigne donnée à l'avance, et à émettre un signal de sortie correspondant au résultat de la comparaison;

b) le signal de sortie du dispositif comparateur (7) est amené à un dispositif de traitement de signal et/ou à une mémoire.

3. Dispositif selon revendication 2, caractérisé par le fait que le dispositif de traitement de signal est réalisé en tant que dispositif de commande de couple de freinage (5a, 5b, 14a, 14b) qui commande le couple de freinage en fonction du signal de sortie du dispositif comparateur (7).

4. Dispositif selon revendication 3, caractérisé par les caractéristiques suivantes:

le dispositif est agencé dans une installation de freinage d'un véhicule automobile ou d'une combinaison de véhicules, notamment pour circulation routière, ci-après dite "véhicule", ayant au moins deux freins de roues ou groupes de freins de roues servant à chaque fois d'unité de freinage, ci-après dits frein(s) de roue(s), l'installation de freinage présentant, pour chaque frein de roue, un dispositif de commande de couple de freinage (5a, 5b, 14a, 14b) et au moins un deuxième dispositif interpréteur/comparateur qui fournit aux dispositifs de commande de couple de freinage (5a, 5b, 14a, 14b) des signaux de sortie dépendant de certaines valeurs caractéristiques du véhicule (par exemple état de charge, patinage des roues), et/ou présentant au moins un dispositif d'actionnement (9) pour établir, d'une manière quelconque désirée, le couple de freinage des freins.

5. Dispositif selon revendication 4, caractérisé par le fait que la valeur de consigne du dispositif comparateur (7) correspond à la température du frein le plus froid lors d'un freinage.

6. Dispositif selon l'une des revendications 4 ou 5, caractérisé par le fait que la valeur de consigne du dispositif comparateur (7) correspond à une valeur maximale admissible de la température de chaque frein de roue.

7. Dispositif selon l'une des revendications 4 à 6, caractérisé par le fait que la valeur de consigne du dispositif comparateur et/ou le signal de sortie fourni par le dispositif interpréteur (6, 11) correspond à la valeur moyenne des températures d'au moins deux freins.

8. Dispositif selon l'une des revendications 2 à 7, caractérisé par le fait que le signal de sortie obtenu lors d'au moins un freinage antérieur et transmis à la mémoire lors de ce freinage antérieur est de nouveau appliqué en tant que valeur de consigne au dispositif comparateur (7).

9. Dispositif selon l'une des revendications 2 à 8, caractérisé par les caractéristiques suivantes:

a) stockage, dans la mémoire, d'un champ de caractéristiques du couple de freinage ou de grandeurs caractérisant le couple de freinage en fonction de la température de l'unité de freinage (4a, 4b, 12a, 12b, 13a, 13b) ou de grandeurs caractérisant cette température;

b) une valeur qui correspond à la température affectée au couple de freinage considéré dans chaque cas est tirée de la mémoire et transmise, en tant que valeur de consigne, au dispositif comparateur (7).

10. Dispositif selon l'une des revendications 5 à 9 caractérisé par les caractéristiques suivantes:

le signal de sortie du dispositif comparateur (7) est constitué de manière à commander les dispositifs de commande de couple de freinage (5a, 5b, 14a, 14b) de façon telle qu'ils règlent les couples de freinage des freins des roues, progressivement ou par échelons, afin que la même température puisse s'établir sur ces freins.

11. Dispositif selon l'une des revendications 5 à 10, caractérisé par les caractéristiques suivantes:

le signal de sortie du dispositif comparateur (7) est constitué de manière à commander les dispositifs de commande de couple de freinage (5a, 5b, 14a, 14b) de façon telle que la température maximale admissible de chaque frein de roue ne soit pas dépassée.

12. Dispositif selon l'une des revendications 5 à 11, caractérisé par les caractéristiques suivantes:

le signal de sortie du dipositif comparateur (7) est constitué de manière à commander les dispositifs de commande de couple de freinage (5a, 5b, 14a, 14b) de façon à établir le couple de freinage affecté à la température de freinage dans chaque cas.

13. Dispositif selon l'une des revendications précédentes, caractérisé par le fait que l'unité de freinage (4a, 4b, 12a, 12b, 13a, 13b) est réalisée, de manière connue en soi, en tant que frein à friction avec au moins un support de garniture de frein présentant au moins une garniture de frein.

14. Dispositif selon les revendications 4 et 13, caractérisé par le fait que les freins des roues sont réalisés de manière connue en soi en tant que freins à tambour ou freins à disque tournant et étrier fixe ou freins à disque fixe et boîtier tournant.

15. Dispositif selon revendication 2, caractérisé par les caractéristiques suivantes:

a) la valeur de consigne du dispositif comparateur (7) correspond à la valeur maximale admissible de la température de l'unité de freinage;

11

b) le dispositif de traitement de signal est réalisé en tant qu'installation d'avertissement (20) qui fournit un signal d'avertissement si la température de l'unité de freinage atteint la valeur maximale admissible.

16. Dispositif selon l'une des revendications 4 à 15, caractérisé par les caractéristiques suivantes:

le dispositif de commande de couple de freinage (5a, 5b, 14a, 14b) est constitué de manière que la régulation de couple de freinage en fonction de la température de l'unité de freinage (4a, 4b, 12a, 12b, 13a, 13b) soit inactivée pour des valeurs prédéterminées du signal de sortie du deuxième dispositif interpréteur/comparateur.

17. Dispositif selon l'une des revendications 4 à 16, caractérisé par les caractéristiques suivantes:

le dispositif comparateur (17) est constitué de manière que la régulation de couple de freinage en fonction de la température de l'unité de freinage (4a, 4b, 12a, 12b, 13a, 13b) soit inactivée pour des valeurs prédéterminées du signal de sortie du deuxième dispositif interpréteur/comparateur.

18. Dispositif selon l'une des revendications précédentes, caractérisé par le fait qu'au moins l'un des groupes ou modules

organe de mesure en fonction de la température (3a, 3b, 15a, 15b, 16a, 16b),

dispositif interpréteur (6, 11),

dispositif comparateur (7),

deuxième dispositif interpréteur/comparateur,

mémoire,

est de conception électrique/électronique.

19. Dispositif selon revendication 18, caractérisé par le fait que les groupes ou modules organe de mesure en fonction de la température (3a, 3b, 15a, 15b, 16a, 16b),

dispositif interpréteur (6, 11),

dispositif comparateur (7),

mémoire,

deuxième dispositif interpréteur/comparateur, sont au moins partiellement réunis structurellement.

20. Dispositif selon les revendications 13 et 18, caractérisé par le fait que l'organe de mesure en fonction de la température (3a, 3b, 15a, 15b, 16a, 16b) est agencé dans le support de garniture de frein et/ou dans la garniture de frein.

21. Dispositif selon revendication 20, caractérisé par les caractéristiques suivantes:

l'organe de mesure en fonction de la température (3a, 3b, 15a, 15b, 16a, 16b) est agencé de manière que, lors de l'occurrence d'une usure maximale admissible de la garniture de frein, son point le plus proche de l'élément susceptible d'être freiné vienne au contact de ce dernier et ferme alors, par celui-ci, un circuit électrique d'indication et/ou d'avertissement.

22. Dispositif selon l'une des revendications 13 à 21, caractérisé par les caractéristiques suivantes:

a) dans le support de garniture de frein ou dans la garniture de frein est agencé un capteur de distance qui, lors d'un freinage, mesure sa distance à l'élément susceptible d'être freiné et fournit au dispositif interpréteur (6, 11), en tant que signal de valeur s'usure, un signal de sortie correspondant à cette distance.

b) le dispositif interpréteur (6, 11) est aménagé de façon à fournir et/ou indiquer des valeurs correspondant au signal de valeur d'usure, ou encore à les fournir au dispositif de traitement de signal (5a, 5b, 14a, 14b, 20) et/ou à la mémoire.

23. Dispositif selon l'une des revendications 13 à 22, caractérisé par les caractéristiques suivantes:

a) dans le support de garniture de frein ou dans la garniture de frein est agencé un capteur de distance qui, lors d'un freinage, mesure sa distance à l'élément susceptible d'être freiné et fournit au dispositif comparateur (7), en tant que signal de valeur d'usure, un signal de sortie correspondant à cette distance.

b) le dispositif comparateur (7) est constitué de manière à fournir et/ou indiquer des valeurs correspondant au signal de valeur d'usure, ou encore de manière à les transmettre au dispositif de traitement de signal (5a, 5b, 14a, 14b, 20) et/ou la mémoire.

24. Dispositif selon l'une des revendications 13 à 23, caractérisé par les caractéristiques suivantes:

a) dans le support de garniture de frein ou dans la garniture de frein est agencé un capteur de distance qui, lors d'un freinage, mesure sa distance à l'élément susceptible d'être freiné, et fournit au deuxième dispositif interpréteur/comparateur, en tant que signal de valeur d'usure, un signal de sortie correspondant à cette distance.

b) le deuxième dispositif interpréteur/comparateur est réalisé de manière à fournir et/ou indiquer des valeurs correspondant au signal de valeur d'usure, ou encore de manière à les fournir au dispositif de traitement de signal (5a, 5b, 14a, 14b, 20) et/ou à la mémoire.

25. Dispositif selon l'une des revendications 22 à 24, caractérisé par le fait que le capteur de distance et le capteur de température sont structurellement réunis.

26. Dispositif selon l'une des revendications 13 à 25, caractérisé par les caractéristiques suivantes:

a) un champ de caractéristiques concernant l'affectation du couple de freinage, de la température du dispositif de freinage et de l'épaisseur de la garniture de frein, ou de grandeurs correspondant à ces grandeurs, est stocké dans la mémoire;

b) le dispositif de traitement de signal (5a, 5b, 14a, 14b, 20) reçoit de la mémoire, en tant que signal de valeur d'usure en fonction de la température, une valeur qui correspond à l'épaisseur de garniture de frein définie par le couple de freinage dans le cas considéré et la température du dispositif de freinage dans le cas consdéré.

27. Dispositif selon l'une des revendications 13 à 26, caractérisé par les caractéristiques suivantes:

a) un champ de caractéristiques correspondant à l'affectation du couple de freinage, de la température du dispositif de freinage et de l'épaisseur de la garniture de frein, ou à ces grandeurs, est stocké dans la mémoire;

b) le dispositif comparateur (7) reçoit de la mémoire, en tant que signal de valeur d'usure dépendant de la température, une valeur qui correspond à l'épaisseur de garniture de friction définie par le couple de freinage dans le cas considéré et par la température du dispositif de freinage dans le cas considéré.

28. Dispositif selon l'une des revendications 26 et 27, caractérisé par les caractéristiques suivantes:

a) les signaux de valeur d'usure dépendant de la température, provenant d'au moins deux dispositifs de freinage, sont appliqués au dispositif comparateur (7);

b) le signal de valeur d'usure en fonction de la température, dépendant à chaque fois de la plus grande épaisseur de garniture de friction est utilisé en tant que valeur de consigne du dispositif comparateur (7).

## Claims

1. An arrangement for measuring a braking torque applied from a brake device to a brakable component wherein this brake device and the brakable component can form a brake unit (4a, 4b, 12a, 12b, 13a, 13b), characterized in that at the brakable component and/or the brake device there is arranged at least one temperature-dependent measuring element (3a, 3b, 15a, 15b, 16a, 16b) the output signal of which is fed to an evaluator (6, 11) which forms therefrom an output signal embodying the corresponding braking torque.

2. An arrangement according to claim 1, characterized by the following features:

a) a comparator (7) is provided which serves to compare the output signals produced by the evaluator (6, 11) with at least one predetermined reference value and to produce an output signal corresponding to the result of the comparison;

b) the output signal of the comparator (7) is fed to a signal-processing device and/or to a memory.

3. An arrangement according to claim 2, characterized in that the signal-processing device is constructed as a braking torque control device (5a, 5b, 14a, 14b) which controls the braking torque in accordance with the output signal of the comparator (7).

4. An arrangement according to claim 3, characterized by the following features:

the device is arranged in a vehicle brake system of a vehicle or a vehicle combination, in particular for road traffic, hereinafter referred to as a vehicle, with at least two wheel brakes or groups of wheel brakes, hereinafter referred to as wheel brake(s), each one serving as a brake unit, wherein the vehicle brake system, for each wheel brake, has a brake torque control device (5a, 5b, 14a, 14b) and at least one second evaluator/comparator which produces output signals to the braking torque control devices (5a, 5b, 14a, 14b) depending on specific vehicle characteristics (e.g.

load state, wheel slip), and/or at least one actuating device (9) for manual adjustment of the braking torque of the wheel brakes.

5. An arrangement according to claim 4, characterized in that the reference value of the comparator (7) corresponds to the temperature of the colder wheel brake in a braking operation.

6. An arrangement according to one of claims 4 or 5, characterized in that the reference value of the comparator (7) corresponds to a maximum permissible temperature value of each wheel brake.

7. An arrangement according to one of claims 4 to 6, characterized in that the reference value of the comparator (7) and/or the output signal produced by the evaluator (6, 11) corresponds to the mean value of the temperatures of at least two wheel brakes.

8. An arrangement according to one of claims 2 to 7, characterized in that as reference value the output signal of the comparator (7), obtained during at least one earlier brake actuation and fed during this earlier brake actuation to the memory, is fed to the comparator (7) again.

9. An arrangement according to one of claims 2 to 8, characterized by the following features:

a) performance characteristics of the braking torque or of variables characterizing the braking torque in dependence on the temperature of the brake unit (4a, 4b, 12a, 12b, 13a, 13b) or of variables characterizing this temperature are stored in the memory;

b) as a reference value a value corresponding to the temperature associated with the particular braking torque is fed to the comparator (7) from the memory.

10. An arrangement according to one of claims 5 to 9, characterized by the following features:

the output signal of the comparator (7) is constructed so that it controls the braking torque control devices (5a, 5b, 14a, 14b) so that these adjust the braking torques of the wheel brakes continuously or in stages so that the same temperature can be set at these.

11. An arrangement according to one of claims 5 to 10, characterized by the following features:

the output signal of the comparator (7) is constructed so that it controls the braking torque control devices (5a, 5b, 14a, 14b) so that the maximum permissible temperature value of each wheel brake is not exceeded.

12. An arrangement according to one of claims 5 to 11, characterized by the following features:

the output signal of the comparator (7) is constructed so that it controls the braking torque control devices (5a, 5b, 14a, 14b) so that the braking torque associated with the particular brake temperature is set.

13. An arrangement according to one of the preceding claims, characterized in that the brake unit (4a, 4b, 12a, 12b, 13a, 13b) is constructed in a manner known *per se* as a friction brake with at least one brake lining carrier having at least one brake lining.

14. An arrangement according to claims 4 and

13, characterized in that the wheel brakes are constructed in a manner known *per se* as drum brakes or part-disc brakes or full-disc brakes.

15. An arrangement according to claim 2, characterized by the following features:

a) the reference value of the comparator (7) corresponds to a permissible maximum temperature value of the brake unit;

b) the signal-processing device is constructed as a warning system (20) which produces a warning signal whenever the temperature of the brake unit reaches the permissible maximum value.

16. An arrangement according to one of claims 4 to 15, characterized by the following features:

the braking torque control device (5a, 5b, 14a, 14b) is constructed so that at predetermined values of the output signal of the second evaluator/comparator the braking torque control depending on the temperature of the brake-unit (4a, 4b, 12a, 12b, 13a, 13b) is switched off.

17. An arrangement according to one of claims 4 to 16, characterized by the following features:

the comparator (7) is constructed so that at predetermined values of the output signal of the second evaluator/comparator the braking torque control depending on the temperature of the brake unit (4a, 4b, 12a, 12b, 13a, 13b) is switched off.

18. An arrangement according to one of the preceding claims, characterized in that at least one of the assemblies

temperature-dependent measuring element (3a, 3b, 15a, 15b, 16a, 16b),

evaluator (6, 11),

comparator (7),

second comparator/evaluator,

memory,

is of electric/electronic construction.

19. An arrangement according to claim 18, characterized in that the assemblies

temperature-dependent measuring element (3a, 3b, 15a, 15b, 16a, 16b),

evaluator (6, 11),

comparator (7),

memory,

second comparator/evaluator,

are at least partially structurally combined.

20. An arrangement according to claims 13 and 18, characterized in that the temperature-dependent measuring element (3a, 3b, 15a, 15b, 16a, 16b) is arranged in the brake lining carrier and/or the brake lining.

21. An arrangement according to claim 20, characterized by the following features:

the temperature-dependent measuring element (3a, 3b, 15a, 15b, 16a, 16b) is arranged so that its point nearest the brakable component comes into contact with the brakable component in the event of maximum permissible brake lining wear and in so doing closes via this contact an electrical indicating and/or warning circuit.

22. An arrangement according to one of claims 13 to 21, characterized by the following features:

a) in the braking lining carrier or the brake lining there is arranged a spacing sensor which, on a brake actuation, measures its distance from the brakable component and produces an output signal corresponding to this distance as a wear value signal to the evaluator (6, 11),

b) the evaluator (6, 11) is constructed so that it produces and/or indicates values corresponding to the wear value signal or delivers them to the signal-processing device (5a, 5b, 14a, 14b, 20) and/or the memory.

23. An arrangement according to one of claims 13 to 22, characterized by the following features:

a) in the brake lining carrier or the brake lining there is arranged a spacing sensor which, on a brake actuation, measures its distance from the brakable component and produces an output signal corresponding to this distance as a wear value signal to the comparator (7),

b) the comparator (7) is constructed so that it produces and/or indicates values corresponding to the wear value signal or delivers them to the signal-processing device (5a, 5b, 14a, 14b, 20) and/or the memory.

24. An arrangement according to one of claims 13 to 23, characterized by the following features:

a) in the brake lining carrier or the brake lining there is arranged a spacing sensor which, on a brake actuation, measures its distance from the brakable component and produces an output signal corresponding to this distance as a wear value signal to the second evaluator/comparator,

b) the second evaluator/comparator is constructed so that it produces and/or indicates values corresponding to the wear value signal or delivers them to the signal-processing device (5a, 5b, 14a, 14b, 20) and/or the memory.

25. An arrangement according to one of claims 22 to 24, characterized in that the spacing sensor and the temperature sensor are structurally combined.

26. An arrangement according to one of claims 13 to 25, characterized by the following features:

a) performance characteristics of the balance of braking torque, temperature of the brake lining and friction lining thickness or variables corresponding to these variables are stored in the memory,

b) from the memory there is fed to the signal-processing device (5a, 5b, 14a, 14b, 20) as temperature-dependent wear value signal a value which corresponds to the friction lining thickness defined by the particular braking torque and the particular temperature of the brake device.

27. An arrangement according to one of claims 13 to 26, characterized by the following features:

a) performance characteristics of the balance of braking torque, temperature of the brake lining and friction lining thickness or variables corresponding to these variables are stored in the memory,

b) from the memory there is fed to the comparator (7) as temperature-dependent wear value signal a value which corresponds to the friction lining thickness defined by the particular braking torque and the particular temperature of the brake device.

28. An arrangement according to one of claims 26 and 27, characterized by the following features:

a) the temperature-dependent wear value signals of at least two brake devices are supplied to the comparator (7);

b) as reference value to the comparator (7) there is used the temperature-dependent wear value signal corresponding to the greater friction lining thickness in each case.